# EUROPÄISCHE PATENTSCHRIFT

(11) **EP 1 012 196 B1**
(45) Veröffentlichungstag und Bekanntmachung des Hinweises auf die Patenterteilung: **05.02.2003**
(21) Anmeldenummer: 98949971.0
(22) Anmeldetag: 26.08.1998
(51) Int. Cl.: C08F 263/04, C09J 155/00

(54) **VERFAHREN ZUR HERSTELLUNG LÖSEMITTELFREIER POLIVINYLESTER-DISPERSIONEN MIT ERHÖHTER WASSERRESISTENZ**
METHOD FOR PRODUCING SOLVENT-FREE POLYVINYL ESTER DISPERSIONS WITH GREATER RESISTANCE TO WATER
PROCEDE DE PRODUCTION DE DISPERSIONS DE POLYVINYLESTER SANS SOLVANT, A RESISTANCE ELEVEE A L'EAU

(30) Priorität: 11.09.1997 DE 19739936
(43) Veröffentlichungstag der Anmeldung: 28.06.2000
(73) Patentinhaber: Clariant GmbH, 65929 Frankfurt am Main (DE)
(72) Erfinder: JAKOB, Martin, D-65779 Kelkheim (DE); PRASS, Werner, D-55130 Mainz (DE)
(86) Internationale Anmeldenummer: EP9805419
(87) Internationale Veröffentlichungsnummer: WO99012985

(56) Entgegenhaltungen:
- EP-A- 0 444 827
- US-A- 4 164 489

## Beschreibung

Die vorliegende Erfindung betrifft ein Verfahren zur Herstellung einer Schutzkolloid-stabilisierten Polyvinylester-Dispersion, sowie deren Verwendung als lösemittel- und weichmacherfreier Klebstoff mit erhöhter Wasserresistenz ihrer Verfilmung zum Verkleben von porösen Substraten.

Dispersionsklebstoffe, die vielfach auf Basis von Polyvinylestern aufgebaut sind, werden in der Praxis häufig mit niedrig- oder hochsiedenden Lösemitteln formuliert. In ihrer Funktion als temporäre Weichmacher dienen die Lösemittel als Hilfsmittel zur Filmkonsolidierung, indem sie die minimale Filmbildetemperatur beziehungsweise den Weißpunkt der Dispersionen erniedrigen. Diese Maßnahme gewährleistet die Verarbeitbarkeit der Klebstoffe auch bei Temperaturen in der Nähe des Gefrierpunkts von Wasser. Ihr Vorteil liegt in einer nur geringen negativen Beeinflussung der mechanischen Eigenschaften des Klebefilms, ein großer Nachteil ist jedoch die Abgabe der Lösemittel an die Umwelt. Eine Auflistung von zu diesem Zweck geeigneten gängigen Lösemitteln findet sich beispielsweise in Wood Adhesives, Chemistry and Technology, Band 1, Marcel Dekker, New York, 1989, auf S. 332/333 sowie in Band 2 auf S. 44.

Eine weitere Funktion der Lösemittel besteht in der Verhinderung einer Koagulation der Dispersionen bei Lagerung der Klebstoffe bei tiefen Temperaturen. Der Zusatz von Niedrigsiedern wie Methanol, Ethanol und Aceton als Frostschutzmittel zu Polyvinylacetatdispersionen wird in Chemical Abstracts 86: 56287s beschrieben.

Eine andere Gruppe von höhersiedenden Verbindungen wird als permanente Weichmacher den Klebstoffdispersionen zugesetzt. In diese Gruppe sind beispielsweise Dibutylphthalat und ähnliche Verbindungen einzuordnen. Diese verbleiben zwar nach dem Trocknen im Film, können jedoch die Wärmestabilität der Klebverbindung und deren Resistenz gegen kalten Fluß beeinträchtigen. Eine Übersicht über diese Verbindungen findet sich ebenfalls in Wood Adhesives, Chemistry and Technology, Band 1, Marcel Dekker, New York, 1989, auf S. 331 sowie in Band 2 auf S. 43/44.

Eine lösungsmittel- und weichmacherfreie Klebstoffzusammensetzung ist im Hinblick auf den Umwelt- und Anwenderschutz grundsätzlich von Vorteil, da sowohl auf toxikologisch bedenkliche, als auch bei der Anwendung geruchsbelästigende oder umweltgefährdende Stoffe gänzlich verzichtet wird. Sie kann deshalb insbesondere in als "lösemittelfrei" gekennzeichneten Klebstoffrezepturen verwendet werden.

Während Anwendungen existieren, die durch spezielle, meist auf chemischen Vernetzungsreaktionen basierende, wasserresistente Spezial-Klebstoffe auf Polyvinylesterbasis abgedeckt werden, wie beispielsweise der Holzfensterbau, wird häufig am Markt auch für Allround-Leime neben der Forderung nach ökologischer Unbedenklichkeit auch die einer zumindest kurzzeitigen Wasserbelastbarkeit der Klebverbindungen, d. h. ohne Öffnung der Klebfugen, an die Klebrohstoff-Hersteller herangetragen.

Gegenstand der DE-A 44 31 343 ist eine lösemittel- und weichmacherfreie Klebstoffdispersion auf Basis von Vinylestern, insbesondere Vinylacetat, die im Hinblick auf die anwendungstechnischen Eigenschaften wie der Wärmebeständigkeit der Verklebungen, der Gefrier-Tau-Stabilität der Dispersionen und der Abbindegeschwindigkeit mit herkömmlichen, extern plastifizierten Polyvinylester-Dispersionen vergleichbar ist. Sie beschreibt eine heterogene Dispersion mit einer minimalen Filmbildungstemperatur von 0-7°C, die aus zwei homo- bzw. copolymeren Vinylestern mit einer unterschiedlichen Glasübergangstemperatur (T_{g}) besteht.

Sie besteht zum einen aus einem Homo- oder Copolymerisat A mit einer Glasübergangstemperatur oberhalb von 20°C aus
85-100 Gew.-% eines Vinylesters von Carbonsäuren mit 1 bis 18 Kohlenstoffatomen (a1), insbesondere Vinylacetat,
0 - 5 Gew.-% einer α,β-ungesättigten Carbonsäure (a2),
0 - 5 Gew.-% einer N-funktionellen Verbindung (a3) sowie
0 - 5 Gew.-% eines mehrfach ethylenisch ungesättigten Monomeren (a4),
und zum anderen einem
Copolymerisat B mit einer Glasübergangstemperatur unterhalb von 20°C aus
45 - 98 Gew.-% eines Vinylesters von Carbonsäuren mit 1 bis 18 Kohlenstoffatomen (b1), insbesondere Vinylacetat,
2 - 50 Gew.-% eines α-Olefins mit 2 bis 4 Kohlenstoffatomen (b2), insbesondere Ethylen, sowie
0 - 5 Gew.-% eines mehrfach ethylenisch ungesättigten Monomeren (b3).

Gegenstand der angeführten Schrift ist auch ein Verfahren zur Herstellung der heterogenen Polyvinylester-Dispersionen durch Mischen der Dispersion des Homo- oder Copolymerisats A mit der des Copolymerisats B, sowie auch ein Verfahren zur Herstellung von heterogenen Polyvinylester-Dispersionspulvern durch Sprühtrocknung der auf diese Weise erfindungsgemäß hergestellten Polyvinylester-Dispersionen sowie ein Verfahren zur Herstellung von heterogenen Polyvinylester-Dispersionen durch Redispergieren der Polyvinylester-Dispersionspulver in Wasser.

Es ist prinzipiell bekannt, daß heterogen aufgebaute Dispersionen, außer durch Vermischen von Dispersionen unterschiedlichen Polymerisataufbaus, auch durch Polymerisationen auf vorgebildete Saatpartikel in mehrstufigen Emulsionspolymerisationsverfahren hergestellt werden können, wobei vielfach auch heterogen aufgebaute Polymerpartikel generiert werden (s. A. Rudin, Macromol. Symp. 92, 53-70 (1995) und dort zitierte Patentliteratur).

Bekannt sind heterogene Polymerzusammensetzungen, erzeugt durch Saatpolymerisationen, zur Herstellung von Klebstoffen, die auf copolymeren Polyvinylesterdispersionen basieren, und dort zur Verbesserung der Klebstoffeigenschaften beitragen.

US-A-4 164 489 beschreibt ein Verfahren zur Herstellung von Vinylacetat-Ethylen-Copolymeren durch Emulsionspolymerisation bei dem Vinylacetat und Ethylen kontinuierlich in Gegenwart eines Saatlatex polymerisiert werden, der so gebildete Latex kontinuierlich aus der Reaktionsmischung entfernt wird und anschließend eine Nachpolymerisation des noch im Latex enthaltenen monomeren Vinylacetats erfolgt. Die so hergestellten Latices zeigen ein gesteigertes Adhäsionsvermögen gegenüber verschiedenen Substraten.

JP-A 252280/86 (Chemical Abstracts 106:197587) beschreibt einen Papierklebstoff auf Basis von Polyvinylacetat mit guter Schnellabbindung und Gefrier-Tau-Stabilität. Der Dispersionsklebstoff wird hergestellt durch Emulsionspolymerisation von Vinylacetat in Gegenwart einer Saatgrundlage, bestehend aus einem Ethylen-Vinylacetat-Copolymeren mit Ethylengehalten im Copolymeren von 10 bis 30 Gew.-%. Stabilisiert wird das Emulsionspolymerisat durch Polyvinylalkohol. Der Klebstoff wird anschließend mit dem Weichmacher Dibutylphthalat konfektioniert.

Gegenstand der JP-A 135575/80 (Chemical Abstracts 96: 86638) sind Saatpolymerisationen von Vinylacetat auf Ethylen-Vinylacetat-Copolymere mit Ethylengehalten von 10-55 Gew.-%. Polyvinylalkohol dient als Stabilisator. Zusätzlich können bis zu 40 Gew.-% Comonomere zusammen mit Vinylacetat polymerisiert werden. Die Emulsionen finden Verwendung als schnellabbindender Papierkleber für wasserfeste Papierverklebungen. Substantielle Mengen an Dibutylphthalat (20 Gewichtsteile auf 100 Gewichtsteile Vinylacetat) sind in den Klebstoffen enthalten.

US-A 3,769,151 beschreibt eine Klebstoffemulsion, die durch Saatpolymerisation hergestellt wird. Als Saatgrundlage dient eine mit teilverseiftem Polyvinylalkohol und anionischem Emulgator stabilisierte Vinylacetat-Ethylen-Emulsion mit Ethylenanteilen von 5-20 Gew.-% in Gegenwart welcher ein Terpolymer aus Vinylacetat, Ethylen und einer ungesättigten Säure, beispielsweise Acrylsäure, hergestellt wird, das mit einem Gemisch aus teil- und vollverseiftem Polyvinylalkohol, sowie Emulgatoren stabilisiert wird. Die Funktion der Säure besteht in einer Verbesserung der Adhäsion zu Vinylfolien sowie in einer Weichmacheraufnahme, welcher in den Emulsionen mitverwendet werden kann.

Die Klebverbindungen aus den heterogenen, lösemittel- und weichmacherfreien Polyvinylesterdispersionen der DE-A 44 31 343 besitzen zwar eine im Vergleich zu extern plastifizierten Dispersionen gute Wärmeresistenz, ihnen fehlt jedoch noch eine ausreichende Kurzzeitkaltwasserbeständigkeit, die beispielsweise die Einordnung in die Beanspruchungsgruppe (Durability Class) D2 der EN 204 gestattet (s. Vergleichsbeispiel V1). Die Dispersionen der JP-A 135575/80 besitzen offensichtlich eine gewisse Wasserresistenz, sind jedoch nicht weichmacherfrei. In der US-A-3,769,151 wird Ethylen in beiden Polymerisationsschritten als Comonomer verwendet. Die Wärmebeständigkeit dieser Klebstoffe ist wegen der reduzierten Glasübergangstemperatur des Hauptpolymerisats a priori als niedrig anzusehen. Weichmacher, beispielsweise Phthalate, werden darüber hinaus ebenfalls in den Produkten verwendet.

Aufgabe dieser Erfindung war es also, ein Verfahren zur Herstellung einer im wesentlichen mit Polyvinylalkohol stabilisierten Klebstoffdispersion unter Verzicht auf niedrig- und hochsiedende Lösemittel und Weichmacher aufzufinden, die auf einem Vinylester, insbesondere Vinylacetat, als Hauptmonomer beruhend, im Hinblick auf die anwendungstechnischen Eigenschaften wie der Wärmebeständigkeit der Verklebungen und der Gefrier-Tau-Stabilität der Dispersionen mit den herkömmlichen, extern plastifizierten Polyvinylester-Dispersionen vergleichbar ist und zusätzlich der Klebfuge eine Kurzzeitwasserkaltbeständigkeit verleiht.

Die Aufgabe wird erfindungsgemäß gelöst durch ein Verfahren zur Herstellung einer heterogenen Dispersion aus zwei, in der Gesamtheit im wesentlichen mit Polyvinylalkohol stabilisierten Polyvinylestern A und B mit jeweils einer unterschiedlichen Glasübergangstemperatur (T_{g}), das dadurch gekennzeichnet ist, daß zunächst eine Polyvinylester-Emulsion als Saatgrundlage hergestellt wird, deren Polymerisat A eine niedrige Glasübergangstemperatur aufweist, in Gegenwart welcher anschließend eine zweite Emulsionspolymerisation durchgeführt wird unter Aufbau eines zweiten Polymerisats B eines Vinylesters mit einer höheren Glasübergangstemperatur.

Gegenstand der vorliegenden Erfindung ist also ein Verfahren zur Herstellung einer heterogenen im wesentlichen mit Polyvinylalkohol stabilisierten Polyvinylesterdispersion ohne Zusatz von Lösemitteln und Weichmachern mit einer minimalen Filmbildungstemperatur unterhalb von 10°C, die aus einem Homo- oder Copolymerisat A mit einer Glasübergangstemperatur oberhalb von 20°C aus 85-100 Gew.-% eines Vinylesters von Carbonsäuren mit 1 bis 18 Kohlenstoffatomen (a1),
0 - 10 Gew.-% einer α,β-ungesättigten Carbonsäure (a2) und/oder, einer N-funktionellen Verbindung (a3) sowie
0 - 5 Gew.-% eines mehrfach ethylenisch ungesättigten Monomeren (a4), und einem
Copolymerisat B mit einer Glasübergangstemperatur unterhalb von 20°C aus 45 - 98 Gew.-% eines Vinylesters von Carbonsäuren mit 1 bis 18 Kohlenstoffatomen (b1),
2 - 50 Gew.-% eines α-Olefins mit 2 bis 4 Kohlenstoffatomen (b2) sowie
0 - 5 Gew.-% eines mehrfach ethylenisch ungesättigten Monomeren (b3) besteht,
wobei das Homo- oder Copolymerisat A durch Emulsionspolymerisation in Gegenwart einer Saatemuision des Copolymerisats B hergestellt wird und der Mengenanteil der Polymerisate A und B in der heterogenen Dispersion 1 : (0,05 bis 2), vorzugsweise 1 : (0,15 bis 1) beträgt.

Die minimale Filmbildungstemperatur der Dispersion des heterogenen Polyvinylesters beträgt vorzugsweise 0 bis 7°C.

Zusammensetzung des Homo- oder Copolymerisats A:
Als Monomere der Gruppe a1 sind vorzugsweise Vinylester der Carbonsäuren mit 1 bis 12 Kohlenstoffatomen geeignet, beispielsweise Vinylformiat, Vinylacetat, Vinylpropionat, Vinylisobutyrat, Vinylpivalat, Vinyl-2-ethylhexanoat, Vinylester von gesättigten α-verzweigten Monocarbonsäuren mit 9 oder 10 Kohlenstoffatomen im Säurerest (®Versaticsäuren), sowie Vinylester von längerkettigen gesättigten oder ungesättigten Fettsäuren wie Vinyllaurat oder Vinylstearat sowie Vinylester der Benzoesäure oder p-tert-Butylbenzoesäure. Besonders bevorzugt ist Vinylacetat.

Beispiele für Monomere der Gruppe a2 sind α,β-ungesättigte Säuren wie Acrylsäure, Methacrylsäure, α,β-ungesättigte Dicarbonsäuren wie Maleinsäure, Fumarsäure, Itaconsäure und Citraconsäure sowie deren primäre Monoamide oder sekundäre Monoamide oder Monoester mit jeweils aliphatischen einwertigen Alkoholen mit 1 bis 18, vorzugsweise 1 bis 12 Kohlenstoffatomen. Besonders bevorzugte Monomere sind Acrylsäure und Methacrylsäure. Der Einbau der freien Säuren bewirkt eine Gefrier-Tau-Stabilität der Dispersionsmischungen.

Beispiele für die funktionellen Stickstoffverbindungen a3 sind (Meth)acrylamid, Allylcarbamat, N-Methylol(meth)acrylamid, N-Methylolallylcarbamat sowie die N-Methylolester, -alkylether oder Mannichbasen des N-Methylol(meth)acrylamids oder N-Methylolallylcarbamats, Acrylamidoglykolsäure, Acrylamidomethoxyessigsäuremethylester, N-(2,2-Dimethoxy-1-hydroxyethyl)acrylamid. Weitere Beispiele sind N-Dimethylaminopropyl(meth)acrylamid, N-Methyl(meth)acrylamid, N-Butyl(meth)acrylamid, N-Cyclohexyl(meth)acrylamid, N-Dodecyl(meth)acrylamid, N-Benzyl(meth)acrylamid, p-Hydroxyphenyl(meth)acrylamid, N-(3-Hydroxy-2,2-dimethylpropyl)methacrylamid sowie Ethylimidazolidonmethacrylat, Vinylpyrrolidon und N-Vinylformamid.

Besonders bevorzugt sind die N-Methylolamide von Acrylsäure und Methacrylsäure (N-Methylolacrylamid und N-Methylolmethacrylamid). Diese Comonomere ermöglichen es, in Kombination mit sauren Härtern einen höheren Grad an Kalt-Wasserresistenz der verfilmten Klebstoffe zu erhalten. Außerdem können sie aufgrund ihrer vernetzbaren Gruppen eine höhere Wärmeresistenz der verfilmten Dispersionen bewirken.

Beispiele für Monomere der Gruppe a4 sind Diallylphthalat, Diallylmaleinat, Triallylcyanurat, Tetraallyloxyethan, Divinylbenzol, Butandiol-1,4-dimethacrylat, Triethylenglykoldimethacrylat, Divinyladipat, Allyl(meth)acrylat, Vinylcrotonat, Methylenbisacrylamid, Hexandioldiacrylat, Pentaerythritoldiacrylat und Trimethylolpropantriacrylat.

Das Homo- oder Copolymerisat A enthält vorzugsweise mindestens 0,05 Gew.-% Monomereinheiten bestehend aus einer α,β-ungesättigten Carbonsäure (a2) und/oder einer N-funktionellen Verbindung (a3).

In einer bevorzugten Ausführungsform enthält das Polymerisat A Comonomereinheiten aus der Gruppe Acrylsäure, Methacrylsäure, Maleinsäure, N-Methylolacrylamid und N-Methylolmethacrylamid.

Zusammensetzung des Copolymerisats B:
Als Vinylester der in der Saatemulsion verwendeten Monomergruppe b1 sind vorzugsweise die in der Gruppe a1 genannten Verbindungen geeignet, die bezüglich der im Homo-oder Copolymeren A verwendeten gleich oder verschieden sein können. Vorzugsweise ist der für das Copolymerisat B eingesetzte Vinylester derselbe, der im Polymer verwendet wird, insbesondere Vinylacetat.

Als Monomer der Gruppe b2 wird insbesondere Ethylen eingesetzt.

Als Monomere der Gruppe b3 eignen sich die unter a4 genannten Verbindungen, die bezüglich der im Homo- oder Copolymerisat A verwendeten gleich oder verschieden sein können.

Die Glasübergangstemperatur des Homo- oder Copolymerisats A liegt vorzugsweise oberhalb von 25°C, insbesondere bei mindestens 30°C.

Die Glasübergangstemperatur des Copolymerisats B liegt vorzugsweise unterhalb von 15°C.

Beide Polymerisate A und B werden in der Dispersion überwiegend durch Schutzkolloide stabilisiert, vorzugsweise durch ein oder mehrere Polyvinylalkohole, die insbesondere einen Hydrolysegrad von 60 bis 100 Mol-% und eine Viskosität der 4 %igen wäßrigen Lösung von 2 bis 70 mPa^{·}s, gemessen bei 20°C, aufweisen.

In einer besonders bevorzugten Ausführungsform werden die Polymerisate A und B in der fertigen Dispersion durch 2 bis 20 Gew.-% Polyvinylalkohol vom Hydrolysegrad 60 bis 100 Mol-% und Viskositätten der 4 %igen wäßrigen Lösungen bei 20°C von 2 bis 70 mPa^{·}s stabilisiert.

Der zur Herstellung der Saatemulsion aus dem Copolymerisat B verwendete Polyvinylalkohol kann von dem in der Hauptpolymerisation zur Herstellung des Homo- oder Copolymerisats A verwendeten gleich oder verschieden sein. Dasselbe gilt für die Mengen. Der Mengenanteil der Schutzkolloide bezogen auf die Gesamtmasse beider Polymerisate A und B, beträgt in der fertigen Dispersion vorzugsweise 2 bis 20 Gew.-%, insbesondere 5 bis 15 Gew.-%. Vorzugsweise wird teilverseifter Polyvinylalkohol vom Hydrolysegrad von 80 - 92 Mol-% verwendet. Die anteilige Verwendung von vollverseiftem Polyvinylalkohol in Mengen, die die Stabilität der Dispersion nicht beeinträchtigen, vorzugsweise zur Hauptpolymerisation der Monomergruppen a1 - a4, kann den Effekt der Kurzzeitkaltwasserbeständigkeit weiter verbessern.

Weiterhin können übliche anionische, nichtionische oder kationische Emulgatoren als Costabilisatoren sowohl zur Herstellung der Saat, als auch zur Hauptpolymerisation mitverwendet werden. Deren Mengenanteil kann bis zu 3 Gew.-% betragen, bezogen auf die Gesamtmasse der Polymerisate A und B.

Die Herstellung der als Saatemulsion verwendeten copolymeren Polyvinylesteremulsion des Copolymerisats B wird bevorzugt unter Verwendung von Vinylacetat und Ethylen als Monomere aus den Gruppen b1 bzw. b2 nach der üblichen dem Fachmann bekannten radikalischen Druckemulsionspolymerisation in dazu geeigneten Rühr-Autoklaven durchgeführt.

Durch Variation der Prozessparameter, insbesondere des Ethylenpartialdrucks und der Reaktionstemperatur, wird der Ethylenanteil im Copolymerisat B auf Werte zwischen 2 und 50 Gew.-%, bevorzugt zwischen 15 und 35 Gew.-% eingestellt. Bevorzugt liegt die Glasübergangstemperatur des Copolymerisats B in einem vorteilhaften Bereich zwischen -15°C und 15°C.

Als Radikalstarter kommen wasserlösliche und/oder öllösliche Initiatorsysteme wie Peroxodisulfate, Azoverbindungen, Wasserstoffperoxid, organische Hydroperoxide oder Dibenzoylperoxid zum Einsatz. Diese können entweder für sich oder in Kombination mit reduzierenden Verbindungen wie Fe(II)-Salzen, Natriumpyrosulfit, Natriumhydrogensulfit, Natriumsulfit, Natriumdithionit, Natriumformaldehydsulfoxylat oder Ascorbinsäure als Redoxkatalysatorsystem verwendet werden.

Zur Herstellung der Saatemulsion besonders bevorzugte Initiatoren sind reines Ammonium- oder Alkaliperoxodisulfat.

Von der zur Stabilisierung der Gesamtmenge der Polymerisate A und B verwendeten Gesamtmenge an Polyvinylalkohol kann ein Teil zur Herstellung der Saatemulsion des Copolymerisats B verwendet werden. Dieser kann hinsichtlich des Molekulargewichts und des Hydrolysegrads von dem in der Hauptpolymerisation verwendeten gleich oder verschieden sein. Wenn optional Emulgatoren zur Stabilisierung verwendet werden, können auch diese teilweise zur Herstellung der Saat und teilweise zur Herstellung der Enddispersion verwendet werden. Die zur Herstellung der Saatemulsion verwendeten Emulgatoren können von den in der Hauptpolymerisation verwendeten Emulgatoren vom Typ her gleich oder verschieden sein.

Wird ein Polymerisationsschritt ohne Verwendung von Polyvinylalkohol durchgeführt, wird das in diesem Schritt hergestellte Polymerisat ausschließlich über Emulgatoren stabilisiert. Die Gesamtmenge an Polyvinylalkohol wird dann als Stabilisierungsmittel, gegebenenfalls mit weiterem Emulgator, im anderen Polymerisationsschritt eingesetzt.

Die Stabilisierungsmittel können in beiden Schritten entweder ganz vor Polymerisationsbeginn vorgelegt werden, als auch partiell vorgelegt und partiell dosiert oder auch nachträglich zugegeben werden.

In der bevorzugten Ausführungsform dieser Erfindung wird Polyvinylalkohol sowohl zur Stabilisierung der Saatemulsion des Copolymerisats B, als auch in der Hauptpolymerisation zur Stabilisierung des Homo- oder Copolymerisats A verwendet. Bei Mitverwendung von Emulgatoren werden diese vorzugsweise zur Herstellung der Saatemulsion eingesetzt. Besonders bevorzugt ist dabei, daß jeweils die Gesamtmenge der Stabilisierungsmittel vor den Polymerisationen in der Flotte vorgelegt wird.

Der Feststoffgehalt der Saatemulsion des Copolymerisats B liegt vorzugsweise zwischen 30 und 65 Gew.-%, insbesondere zwischen 40 und 60 Gew.-%, besonders bevorzugt zwischen 45 und 55 Gew.-%.

Die Herstellung der Polyvinylesterdispersion des Homo- oder Copolymerisats A erfolgt nach üblichen kontinuierlichen oder diskontinuierlichen, bevorzugt diskontinuierlichen Verfahren der drucklosen radikalischen Emulsionspolymerisation unter Vorlage vorzugsweise der Gesamtmenge der Saatemulsion des Copolymerisates B und Vinylacetats als besonders bevorzugtem Monomeren der Gruppe a1. Die Polymerisation kann in Batch, Zulauf- oder kombinierten Batch/Zulauf-Verfahren erfolgen, wobei allerdings das reine Zulaufverfahren aufgrund der Pfropfung zur Erhöhung der Wasserfestigkeiten zu bevorzugen ist. Sie kann im selben Reaktionsgefäß unmittelbar nach Beendigung der Herstellung des Copolymerisates B erfolgen im Sinne einer Zweistufenpolymerisation oder auch nach Transferierung der Saatemulsion in einen zweiten Reaktor, wobei die Saatemulsion noch getrennt charakterisiert werden kann.

Die Menge an vorgelegter Saatemulsion richtet sich insbesondere nach dem Ethylenanteil des Copolymerisats B. Sie wird so bemessen, daß das Gewichtsverhältnis der Polymerisate A und B in der erfindungsgemäß hergestellten heterogenen lösemittel- und weichmacherfreien Dispersion 1 : (0,05 bis 2), vorzugsweise 1 : (0,15 bis 1), und die minimale Filmbildetemperatur der fertigen Dispersion vorzugsweise 0 - 7 °C beträgt.

Zur Herstellung des Homo- oder Copolymerisats A bevorzugte Initiatorsysteme sind die zur Herstellung des Copolymerisats B verwendeten und dort beschriebenen Verbindungen. Zur Verbesserung der angestrebten Kurzzeitkaltwasserbeständigkeiten der Klebfugen aus den Dispersionen ist es jedoch bevorzugt, Redoxinitiatorsysteme zu verwenden. Eine besonders bevorzugte Initiatorkombination besteht aus tert.-Butylhydroperoxid und Natriumformaldehydsulfoxylat (®Rongalit bzw. ®Brüggolit).

Durch Mitverwendung der ungesättigten Säuren der Monomergruppe a2 wird insbesondere die Gefrier-Tau-Stabilität weiter verbessert. Sie werden entweder vor der Polymerisation vorgelegt, oder vorzugsweise während der Polymerisation separat zudosiert. Es können ebenfalls Anhydride ungesättigter Säuren verwendet werden, beispielsweise Maleinsäureanhydrid, welche bei Kontakt mit wäßrigen Medien zu den freien Säuren hydrolysieren.

Durch Mitverwendung der N-funktionellen Verbindung der Monomergruppe a3 läßt sich die Wärmebeständigkeit der Klebfugen durch Vernetzung weiter verbessern. Darüber hinaus sind nach saurer Katalyse mit aciden Metallsalzen lösemittel- und weichmacherfreie Klebstoffdispersionen mit einem höheren Grad an Langzeit-Kaltwasserbeständigkeit als die im Mischungsverfahren der DE-A 44 31 343 hergestellten Dispersionen zugänglich (s. Beispiel 3 und Vergleichsbeispiel V2).

Der Endfeststoffgehalt der heterogenen Polyvinylesterdispersion der Polymerisate A und B liegt vorzugsweise zwischen 30 und 65 Gew.-%, insbesondere zwischen
40 und 60 Gew.-%, besonders bevorzugt zwischen
45 und 55 Gew.-%.

Der Dispersion können nach Beendigung der Polymerisationen weitere Additive nachträglich zugesetzt werden, beispielsweise Entschäumer, Füllstoffe und/oder Konservierungsmittel.

Die erfindungsgemäßen, durch Saatpolymerisation hergestellten lösemittel- und weichmacherfreien heterogenen Polyvinylesterdispersionen können auch durch Sprühtrocknung in Polyvinylester-Dispersionspulver-Klebstoffe überführt werden, die anschließend in Wasser redispergiert werden können. Die Sprühtrocknung kann in beliebigen zur Sprühtrocknung von Flüssigkeiten geeigneten und dem Fachmann bekannten Vorrichtungen, beispielsweise solchen mit Zweistoffdüsen oder mit einer rotierenden Zerstäuberscheibe, unter Verwendung von dem Fachmann geläufigen Antibackmitteln durchgeführt werden.

Die erfindungsgemäßen heterogenen Polyvinylesterdispersionen eignen sich als Klebstoffe zum Verkleben von porösen und semiporösen Substraten, insbesondere eignen sie sich zur Herstellung von lösemittel- und weichmacherfreien Holzleimen, zur Herstellung von Spezial-Holzleimen mit erhöhter Wasserresistenz sowie zur Herstellung von Dispersionspulvern, deren Redispersionen wieder lösemittel- und weichmacherfreie Klebstoffe darstellen. Sie zeichnen sich darüber hinaus durch eine ausgezeichnete Kurzzeitkaltwasserbeständigkeit aus, die mindestens die Einstufung in die Beanspruchungsgruppe EN 204/D2 zuläßt. Des weiteren können mit den erfindungsgemäßen Dispersionen lösemittel- und weichmacherfreie Klebstoffe mit erhöhter Wasserfestigkeit zum Verkleben von Holz, Möbelfolien sowie Papier und Papierprodukten sowie hochwertige Klebstoffe für Tapeten und Klebstoffe für die Verklebung von Möbelfolien auf Spanplatten hergestellt werden. Anwendungsbereiche für die erfindungsgemäßen Klebstoffe sind insbesondere Innenräume mit erhöhter Luftfeuchte (z. B. Küchen, und Badezimmer).

Die folgenden Beispiele dienen zur Erläuterung der Erfindung, ohne diese jedoch einzuschränken. Die in den Beispielen aufgeführten Teile und Prozente beziehen sich auf das Gewicht.

### Beispiele

### Herstellung einer Saatemulsion

Ein Vinylacetat-Ethylen-Druckemulsionspolymerisat wird unter Vorlage der Gesamtmenge an Vinylacetat in einem 30 I-Rührautoklaven unter 5·10⁶ Pascal (50 bar) Startdruck des Ethylens hergestellt. Die Polymerisationstemperatur beträgt 60°C. Es wird unter Einsatz von 7 % bezogen auf Polymerisat, eines Polyvinylalkohols vom Hydrolysegrad 88 Mol.-% und einer Viskosität der 4 %igen wäßrigen Lösung bei 20°C von 8 mPa^{·}s und 7 % bezogen auf Polymerisat, eines Polyvinylalkohols vom Hydrolysegrad 88 Mol.-% und einer Viskosität der 4 %igen wäßrigen Lösung bei 20°C von 4 mPa^{·}s als Schutzkolloid polymerisiert. Das Polymerisat weist eine Glasübergangstemperatur von ca. -10°C auf. Die Viskosität beträgt 4 Pa^{·}s (Brookfield RVT 4/20, 23°C). Der Feststoffgehalt beträgt 50 %. Der Anteil des Vinylacetat-Ethylen-Copolymerisats bezogen auf die Gesamtmasse der Emulsion beträgt ca. 43,8 %.

### Beispiele 1 und 2

In einem Glasrührkesselreaktor mit Ankerrührer, der mit Zulaufmöglichkeiten, Rückflußkühler, Mantelheizung und -kühlung sowie Stickstoffanschluß versehen ist, werden 95 Teile der Saatemulsion und eine Lösung von 12 Teilen teilverseiftem Polyvinylalkohol vom Hydrolysegrad 88 Mol-% (zusammengesetzt aus je 6 Teilen Polyvinylalkohol einer Viskosität der 4 %igen wäßrigen Lösung von 8 beziehungsweise 18 mPa^{·}s) in 105 (Beispiel 1) bzw. 95,5 Teilen (Beispiel 2) entionisiertem Wasser hergestellt. Nach Zugabe von 0,1 Teilen Entschäumungsmittel (®Agitan 280, Münzing-Chemie) und Spülen mit Stickstoff werden 5 Teile Vinylacetat einemulgiert. Die Innentemperatur wird auf 50°C angehoben und die Polymerisation nach Zugabe einer Lösung von 0,03 Teilen tert.-Butylhydroperoxid (70 %ig, ®Trigonox AW 70, Akzo-Chemie) in 0,5 Teilen Wasser sowie mit dem Beginn eines 3,5-stündigen linearen Zulaufs von 0,04 Teilen ®Rongalit C in 4,2 Teilen Wasser gestartet. Nach 20 Minuten werden ein bzw. zwei Monomerzuläufe gestartet. Diese bestehen einerseits aus 95 Teilen Vinylacetat (Beispiel 1) bzw. 94,4 Teilen Vinylacetat mit 0,1 Teilen Trimethylolpropantriacrylat (bei Beispiel 2) mit jeweils 0,09 Gewichtsteilen tert.-Butylhydroperoxid und andererseits aus 0,5 Teilen Acrylsäure in 9,5 Teilen Wasser (nur Beispiel 2) und werden bei einer Innentemperatur von 69 - 73°C innerhalb von 2,5 Stunden zudosiert. Nach Beendigung des ®Rongalit-Zulaufs wird gegebenenfalls mit der nachträglichen Zugabe von wäßrigen Lösungen von Wasserstoffperoxid (30 %) und Ascorbinsäure zur Entfernung der Restmonomeren nachpolymerisiert. Nach Abkühlen wird mit 10 %iger Natronlauge der pH auf den Wert 5 eingestellt.
Die Viskositäten der Dispersion betragen bei einem Feststoffgehalt von ca: 50 % 8 Pa^{·}s bzw. 12 Pa^{·}s (Brookfield RVT 6/20, 23°C).

### Beispiel 3

Gemäß der oben angegebenen Vorschrift unter Verwendung von 95 Teilen Saatemulsion wird eine Dispersion hergestellt mit dem Unterschied, daß anstelle der Acrylsäurelösung eine Lösung von 2 Teilen N-Methylolacrylamid in 13 Teilen Wasser verwendet wird und Trimethylolpropantriacrylat nicht verwendet wird. Es werden 5 Teile Vinylacetat zum Starten vorgelegt, 93 Teile Vinylacetat zudosiert und nur 92 Teile Wasser in der Flotte verwendet. (Die Comonomerlösung wird durch Verdünnen der handelsüblichen 48 %igen Lösung von N-Methylolacrylamid hergestellt.) Nach beendeter Polymerisation wird nicht neutralisiert. Bei einem Feststoffgehalt von 50 % wird eine Viskosität von 19 Pa^{·}s (Brookfield RVT 6/20, 23°C) erhalten. Es wird noch mit Aluminiumchloridlösung (28 %) modifiziert. (1,5 % festes AlCl₃/Feststoff der Dispersion).

### Dispersionen A1 und A2 für Vergleichsbeispiele V1 und V2

Gemäß der Verfahrensweise der Beispiele 2 und 3 stellt man Dispersionen her, jedoch mit dem Unterschied, daß keine Saatemulsion verwendet wird. Bei Dispersion A2 erfolgt zunächst keine Zugabe von Aluminiumchloridlösung. Kenndaten der Dispersion A1: Feststoffgehalt: ca. 50 %, Viskosität: 39,5 Pa^{·}s (Brookfield RVT 6/20, 23°C), MFT 13°C.

Kenndaten der Dispersion A2: Feststoffgehalt: ca. 50 %, Viskosität: 24,5 Pa^{·}s, (Brookfield RVT 6/20, 23°C), MFT 13°C.

### Vergleichsbeispiele V1 und V2

Zur Herstellung der Vergleichsbeispielmischungen V1 und V2 gemäß DE-A 44 31 343 werden in einem Glasgefäß mit Ankerrührer gemäß den Angaben der Tabelle 1 entsprechende Gewichtsteile der Vinylacetat-Ethylen-Saatemulsion mit den Dispersionen A1 und A2 abgemischt und mindestens 3 Stunden gut durchgerührt. Im Falle des Vergleichsbeispiels 2 wird mit 1,5 Gew.-% Aluminiumchloridlösung (festes AlCl₃/Feststoff des Dispersionsgemisches) als Vernetzungskatalysator nach Beendigung des Mischvorgangs modifiziert.

Die Zusammensetzung der Polymerisate A und B sowie die Ergebnisse der anwendungstechnischen Ausprüfungen finden sich in der Tabelle 1.

Die Ermittlung der Klebfestigkeiten an Buchenholzprüflingen erfolgt gemäß der Prüfnorm DIN EN 204.

Die Herstellung der Prüfkörper erfolgt nach der Vorgehensweise der DIN EN 205. Die Verleimung und Prüfung wird unter Berücksichtigung folgender technischer Kenndaten durchgeführt:
- Leimauftrag:: 150 ± 20 g/m² beidseitiger Auftrag
- Offene Wartezeit:: 3 Minuten
- Geschlossene Wartezeit:: 3 Minuten
- Preßzeit:: 2 Stunden
- Preßdruck:: 0,7 ± 0,1 N/mm²
- Anzahl Prüfkörper:: 20 pro Prüffolge
- Vorschubgeschwindigkeit:: 50 mm/Min.

- Prüfung nach Lagerungsfolge D2/2:: 7 Tage Normalklima*⁾,
3 Stunden in kaltem Wasser
7 Tage Normalklima*⁾,
- Prüfung nach Lagerungsfolge D3/3:: 7 Tage Normalklima*⁾,
4 Stunden in kaltem Wasser
(Prüftemperatur: 23°C ± 2°C),
- Prüfung nach Lagerungsfolge D1/80°C**⁾:: 7 Tage Normalklima*),
2 Stunden Lagerung bei 80°C
(Prüftemperatur: bei 80°C),

*) 23 ± 2°C und 50 ± 5 % relative Luftfeuchte
**) Diese Prüfung ist nicht Bestandteil der DIN EN 204.

Die Einordnung in die Beanspruchungsgruppe D2 nach Lagerungsfolge 2 erfolgt bei einer Reißfestigkeit von ≥ 8 N/mm².

Die Einordnung in die Beanspruchungsgruppe D3 nach Lagerungsfolge 3 erfolgt bei einer Reißfestigkeit von ≥ 2 N/mm².

### Gefrier-Tau-Stabilität

Die Dispersionen werden 24 Stunden bei - 18°C gelagert. Anschließend läßt man langsam wieder auf Raumtemperatur erwärmen und beurteilt die Dispersionen anhand ihres Glasaufstrichs.

**Tabelle 1**

| Beispiel | 1 | 2 | 3 | V1 | V2 |
|---|---|---|---|---|---|
| Verfahren | Saatpolymerisation | Saatpolymerisation | Saatpolymerisation | Mischung | Mischung |
| Dispersion A1 [Teile] | - | - | - | 100 | |
| Dispersion A2 [Teile] | - | - | - | | 100 |
| Saatemulsion zur Abmischung [Teile] | - | - | - | 43 | 43 |
| Zusammensetzung Polymerisat A | | | | | |
| Vinylacetat (a1) | 100 % | 99,4 % | 98 % | 99,4 % | 98 % |
| Acrylsäure (a2) | - | 0,5 % | - | 0,5 % | - |
| N-Methylolacrylamid (a3) | - | - | 2 % | - | 2% |
| Trimethylolpropantriacrylat (a4) | - | 0,1 % | - | 0,1 % | - |
| Zusammensetzung Polymerisat B (ca.) | | | | | |
| Vinylacetat (b1) | 75 % | 75 % | 75 % | 75 % | 75 % |
| Ethylen (b2) | 25 % | 25 % | 25 % | 25 % | 25 % |
| T_{g} Polymerisat A [°C] | 30 | 30 | 30 | 30 | 30 |
| T_{g} Polymerisat B [°C] | -10 | -10 | -10 | -10 | -10 |
| Verhältnis A : B | 1 : 0,42 | 1 : 0,42 | 1 : 0,42 | 1 : 0,42 | 1 : 0,42 |
| MFT [°C] der heterogenen Disp. | 4 | 6 | 6 | 1 | 0 |
| Reißfestigkeit gemäß EN 204 D2/2 [N/mm²] mit % Holzausriß | 9,1 (55 %) | 8,2 (60 %) | - | 5,4 (10%) | - |
| Reißfestigkeit gemäß EN 204 D3/3 [N/mm²] | - | - | 3,3 | - | 2,0 |
| Wärmestand D1/80°C Reißfestigkeit [N/mm²] | 5,0 | 5,7 | 6,9 | 5,2 | 6,7 |
| Gefrier-/Tau-Stabilität bei -18°C | leicht verdickt, stabil | stabil | stabil | stabil | stabil |

In den erfindungsgemäßen Beispielen 2 und 3 sowie in den korrespondierenden, im Mischungsverfahren der DE-A 44 31 343 hergestellten Vergleichsbeispiele V1 und V2, wurden identische Zusammensetzungen und Gewichtsverhältnisse der Polymerisate A bzw. B verwendet.

Die durch Saatpolymerisation der Monomere a1-a3 bzw. a4 auf das Copolymerisat B als verwendete Saatgrundlage hergestellten lösemittel- und weichmacherfreien Dispersionen der erfindungsgemäßen Beispiele 1 und 2 besitzen einen zu Vergleichsbeispiel V1 vergleichbar hohen Wärmestand (D1/80 °C) und sind Gefrier-Tau-stabil. Die Gefrier-Tau-Stabllität wird durch die verwendeten Comonomere a2 und a3 noch verbessert. Die erfindungsgemäßen Beispiele weisen jedoch in der Kurzzeitkaltwasserfestigkeit der Prüffolge D2/2 der EN 204 im Vergleich zu den Vergleichsbeispielen V1 und V2 einen höheren Festigkeitswert und höheren Holzfaserausriß auf.

Der Vergleich des Beispiels 3 mit dem Vergleichsbeispiel 2 gemäß DE-A 44 31 343 zeigt, daß in der Kaltwasserbeständigkeit nach Durchlaufen der Prüffolge D3/3 mit der erfindungsgemäßen Dispersion ebenfalls ein höherer Wert resultiert.

## Patentansprüche

1. Verfahren zur Herstellung einer heterogenen, im wesentlichen mit Potyvinylalkohol stabilisierten Polyvinylesterdispersion ohne Zusatz von Lösemitteln und Weichmachern mit einer minimalen Filmbildungstemperatur unterhalb von 10°C durch Saatemulsionspolymerisation, eines Homo- oder Copolymerisats A mit einer Glasübergangstemperatur oberhalb von 20°C aus 85 -100 Gew.-% eines Vinylesters von Carbonsäuren mit 1 bis 18 Kohlenstoffatomen (a1),
0 - 10 Gew.-% einer α,β-ungesättigten Carbonsäure (a2) und/oder einer N-funktionellen Verbindung (a3) sowie
0 - 5 Gew.-% eines mehrfach ethylenisch ungesättigten Monomeren (a4), in Gegenwart einer Saatemulsion (Saatgrundlage) aus einem Copolymerisat B mit einer Glasübergangstemperatur unterhalb von 20°C aus
45 - 98 Gew.-% eines Vinylesters von Carbonsäuren mit 1 bis 18 Kohlenstoffatomen (b1),2 - 50 Gew.-% eines α-Olefins mit 2 bis 4 Kohlenstoffatomen (b2) sowie
0- 5 Gew.-% eines mehrfach ethylenisch ungesättigten Monomeren (b3), wobei der Mengenanteil der Polymerisate A und B in der heterogenen Dispersion 1:(0,05 bis 2) beträgt.

2. Verfahren nach Anspruch 1, **dadurch gekennzeichnet, daß** im Homo- oder Copolymerisat A mindestens 0,05 Gew.-% Monomereinheiten bestehend aus einer α,β-ungesättigten Carbonsäure (a2) und/oder einer N-funktionellen Verbindung (a3) enthalten sind.

3. Verfahren nach Anspruch 1 oder 2, **dadurch gekennzeichnet, daß** die minimale Filmbildungstemperatur der Dispersion im Bereich von 0 bis 7°C liegt.

4. Verfahren nach Anspruch 1 oder 2, **dadurch gekennzeichnet, daß** die Glasübergangstemperatur des Homo- oder Copolymerisats A oberhalb von 25°C und die Glasübergangstemperatur des Copolymerisats B unterhalb von 15°C liegt.

5. Verfahren nach Anspruch 1 oder 2, **dadurch gekennzeichnet, daß** der Vinylester in den Polymerisaten A und B jeweils Vinylacetat ist und daß das α-Olefin im Copolymerisat B Ethylen ist.

6. Verfahren nach Anspruch 1 oder 2, **dadurch gekennzeichnet, daß** das Polymerisat A Comonomereinheiten aus der Gruppe Acrylsäure, Methacrylsäure, Maleinsäure, N-Methylolacrylamid und N-Methylolmethacrylamid enthält.

7. Verfahren nach Anspruch 1 oder 2, **dadurch gekennzeichnet, daß** die Polymerisate A und B in der fertigen Dispersion durch 2 bis 20 Gew.-% Polyvinylalkohol vom Hydrolysegrad 60 bis 100 Mol-% und Viskositäten der 4%igen wäßrigen Lösungen bei 20°C von 2 bis 70 mPa^{·}s stabilisiert sind.

8. Verfahren nach Anspruch 1 oder 2, **dadurch gekennzeichnet, daß** die Polyvinylesterdispersion zum Polyvinylesterpulver sprühgetrocknet wird.

9. Verfahren nach Anspruch 8, **dadurch gekennzeichnet, daß** das Polyvinylesterpulver anschließend in Wasser redispergiert wird.

10. Verwendung einer heterogenen Polyvinylester-Dispersion nach dem Verfahren von Anspruch 1 oder 2 als Klebstoff zum Verkleben von porösen und semiporösen Substraten.

11. Verwendung einer heterogenen Polyvinylester-Dispersion nach dem Verfahren von Anspruch 1 oder 2 zum Verkleben von Holz, Möbelfolien sowie Papier und Papierprodukten.

## Claims

1. A process for preparing a heterogeneous polyvinyl ester dispersion stabilized essentially with polyvinyl alcohol, without the addition of solvents and plasticizers, having a minimum film-forming temperature of below 10°C by seed emulsion polymerization of a homo- or copolymer A having a glass transition temperature of more than 20°C, comprising 85 -100% by weight of a vinyl ester of carboxylic acids having 1 to 18 carbon atoms (a1), 0 - 10% by weight of an α,β-unsaturated carboxylic acid (a2) and/or of an N-functional compound (a3) and
0 - 5% by weight of a polyethylenically unsaturated monomer (a4) in the presence of a seed emulsion (seed base) comprising a copolymer B having a glass transition temperature of below 20°C, comprising
45 - 98% by weight of a vinyl ester of carboxylic acids having 1 to 18 carbon atoms (b1), 2 - 50% by weight of an α-olefin having 2 to 4 carbon atoms (b2) and
0 - 5% by weight of a polyethylenically unsaturated monomer (b3),
the proportion of the polymers A and B in the heterogeneous dispersion being 1:(0.05 to 2).

2. The process as claimed in claim 1, wherein in the homo- or copolymer A there is at least 0.05% by weight of monomer units consisting of an α,β-unsaturated carboxylic acid (a2) and/or of an N-functional compound (a3).

3. The process as claimed in claim 1 or 2, wherein the minimum film-forming temperature of the dispersion lies within the range from 0 to 7°C.

4. The process as claimed in claim 1 or 2, wherein the glass transition temperature of the homo- or copolymer A is more than 25°C and the glass transition temperature of the copolymer B is below 15°C.

5. The process as claimed in claim 1 or 2, wherein the vinyl ester in the polymers A and B is in each case vinyl acetate and wherein the α-olefin in the copolymer B is ethylene.

6. The process as claimed in claim 1 or 2, wherein the polymer A comprises comonomer units from the group consisting of acrylic acid, methacrylic acid, maleic acid, N-methylolacrylamide and N-methylolmethacrylamide.

7. The process as claimed in claim 1 or 2, wherein the polymers A and B in the finished dispersion are stabilized by from 2 to 20% by weight of polyvinyl alcohol having a degree of hydrolysis of from 60 to 100 mol-% and viscosities of the 4% strength aqueous solutions at 20°C of from 2 to 70 mPa^{·}s.

8. The process as claimed in claim 1 or 2, wherein the polyvinyl ester dispersion is spray dried to give polyvinyl ester powder.

9. The process as claimed in claim 8, wherein the polyvinyl ester powder is subsequently redispersed in water.

10. The use of a heterogeneous polyvinyl ester dispersion in accordance with the process of claim 1 or 2 as an adhesive for bonding porous and semiporous substrates.

11. The use of a heterogeneous polyvinyl ester dispersion in accordance with the process of claim 1 or 2 for bonding wood, furniture films and also paper and paper products.

## Revendications

1. Procédé pour la préparation d'une dispersion d'ester de polyvinyle hétérogène, stabilisée essentiellement avec de l'alcool polyvinylique sans ajout de solvants et d'assouplissants avec une température de formation de film minimale inférieure à 10 °C par polymérisation en émulsion par ensemencement, d'un homo- ou copolymérisat A avec une température de transition vitreuse au-dessus de 20 °C constituée de 85-100 % en poids d'un ester de vinyle d'acides carboxyliques ayant de 1 à 18 atomes de carbone (a1),
0-10 % en poids d'un acide carboxylique α,β-insaturé (a2) et/ou d'un composé N-fonctionnel (a3) ainsi que
0-5 % en poids d'un monomère plusieurs fois éthyléniquement insaturé (a4), en présence d'une émulsion d'ensemencement (substrat d'ensemencement) constituée d'un copolymérisat B avec une température de transition vitreuse inférieure à 20 °C constitué de 45-98 % en poids d'un ester de vinyle d'acides carboxyliques avec de 1 à 18 atomes de carbone (b1),
2-50 % en poids d'une α-oléfine avec 2 à 4 atomes de carbone (b2) ainsi que
0-5 % en poids d'un monomère plusieurs fois éthyléniquement insaturé (b3), dans lequel la proportion en quantité des polymérisats A et B s'élève dans la dispersion hétérogène à 1:(0,05 à 2).

2. Procédé selon la revendication 1, **caractérisé en ce que** dans l'homo- ou copolymérisat A sont contenus au moins 0,05 % en poids de motifs de monomères constitués d'un acide carboxylique α,β-insaturé (a2) et/ou d'un composé N-fonctionnel (a3).

3. Procédé selon la revendication 1 ou 2, **caractérisé en ce que** la température minimale de formation de film de la dispersion se situe dans la gamme de 0 à 7 °C.

4. Procédé selon la revendication 1 ou 2, **caractérisé en ce que** la température de transition vitreuse de l'homo- ou copolymérisat A se situe au-dessus de 25 °C et la température de transition vitreuse du copolymérisat B se situe au-dessous de 15 °C.

5. Procédé selon la revendication 1 ou 2, **caractérisé en ce que** l'ester de vinyle dans les polymérisats A et B est respectivement l'acétate de vinyle et **en ce que** l'α-oléfine dans le copolymérisat B est l'éthylène.

6. Procédé selon la revendication 1 ou 2, **caractérisé en ce que** le polymérisat A contient des motifs de comonomères choisis dans le groupe de l'acide acrylique, l'acide méthacrylique, l'acide maléique, le N-méthylolacrylamide et le N-méthylolméthacrylamide.

7. Procédé selon la revendication 1 ou 2, **caractérisé en ce que** les polymérisats A et B dans la dispersion finie sont stabilisés au moyen de 2 à 20 % en poids d'alcool polyvinylique de degré d'hydrolyse 60 à 100 % en moles et de viscosités des solutions aqueuses à 4 % à 20 °C de 2 à 70 mPa·s.

8. Procédé selon la revendication 1 ou 2, **caractérisé en ce que** la dispersion d'ester de polyvinyle est séchée par pulvérisation en poudre d'ester de polyvinyle.

9. Procédé selon la revendication 8, **caractérisé en ce que** la poudre d'ester de polyvinyle est redispersée ensuite dans l'eau.

10. Utilisation d'une dispersion d'ester de polyvinyle hétérogène selon le procédé de la revendication 1 ou 2 comme colle pour le collage de substrats poreux et semi-poreux.

11. Utilisation d'une dispersion d'ester de polyvinyle hétérogène selon le procédé de la revendication 1 ou 2 pour le collage de bois, de feuilles de meubles ainsi que de papier et de produits en papier.
